# EUROPEAN PATENT SPECIFICATION

(11) **EP 3 889 028 B1**
(45) Date of publication and mention of the grant of the patent: **07.06.2023**
(21) Application number: 19891638.9
(22) Date of filing: 21.11.2019
(51) Int. Cl.: B63B 21/00, B63B 21/04

(54) **MOORING LINE MONITORING SYSTEM, MOORING MANAGEMENT SYSTEM, MOORING LINE MONITORING METHOD, AND MOORING MANAGEMENT METHOD**
SYSTEM ZUR ÜBERWACHUNG EINES VERTÄUUNGSSEILS, SYSTEM ZUR VERTÄUUNGSVERWALTUNG, VERFAHREN ZUR ÜBERWACHUNG EINES VERTÄUUNGGSEILS,UND VERFAHREN ZUR VERTÄUUNGSVERWALTUNG
SYSTÈME DE SURVEILLANCE DE LIGNE D'AMARRAGE, SYSTÈME DE GESTION D'AMARRAGE, PROCÉDÉ DE SURVEILLANCE DE LIGNE D'AMARRAGE ET PROCÉDÉ DE GESTION D'AMARRAGE

(30) Priority: 26.11.2018 JP 2018220101
(43) Date of publication of application: 06.10.2021
(73) Proprietor: Teijin Limited, Osaka-shi, Osaka 530-0005 (JP); Tesac Corporation, Osaka 543-0021 (JP); Mitsui O.S.K. Lines, Ltd., Tokyo 105-8688 (JP)
(72) Inventor: KON Tatsuichiro, Osaka-shi, Osaka 530-0005 (JP); UTSUMI Koji, Osaka-shi, Osaka 550-0013 (JP); NISHI Masahiro, Osaka-shi, Osaka 550-0013 (JP); KOMI Yoshiki, Tokyo 105-8688 (JP); WAKIDA Kumpei, Tokyo 105-8688 (JP); ITO Sho, Tokyo 105-8688 (JP)
(74) Representative: WSL Patentanwälte Partnerschaft mbB
(86) International application number: PCT/JP2019/045619
(87) International publication number: WO 2020/110902

(56) References cited:
- GB-A- 1 241 776
- JP-A- S62 205 891
- JP-A- 2015 051 748
- JP-A- 2017 044 925
- US-A- 3 759 094

## Description

### TECHNICAL FIELD

The present invention relates to a mooring line monitoring system, a mooring management system, a mooring line monitoring method, and a mooring management method used in mooring a vessel to a pier or the like with mooring lines formed of fiber ropes.

### BACKGROUND ART

To moor a relatively large vessel such as an ocean-going vessel or a domestic vessel to the shore such as a pier or a dock, fenders are placed between the vessel and the shore, a loop at an end of each mooring line on the vessel side is put around a mooring member (such as a bitt) on the pier side, and the mooring lines are wound up with mooring devices (such as mooring winches) to moor the vessel to the shore.

A moored vessel sinks and floats with changes in the tides and in the cargo load state of the vessel. Thus, the tension of each mooring line is affected not only by the unsteadiness of the vessel's body receiving waves, but also by various other factors such as changes in meteorological and hydrological conditions, changes in tidal currents, and waves caused by a vessel sailing nearby. For this reason, it is necessary to monitor not only the tensions of the mooring lines when the vessel is moored, but also the tensions of the mooring lines considering these changes in real time.

A fiber rope is typically used as a mooring line used to moor a vessel, and if this fiber rope breaks due to application of excessive load, the vessel moves, collides with a pier or the like, or drifts away from the pier or the like. Also, the relation between the amount of stretch and the tension of a fiber rope involves not only hysteresis but also deterioration due to aging, and therefore there is a problem that it is difficult to estimate the breaking load or elastic modulus of a mooring line and difficult to predict the relation between the mooring state, the motion of the vessel's body, and breakage of the mooring line.

To address this problem, for example, Japanese patent application Kokai publication Nos. Hei 10-109686 and 2005-153595 describe detecting the tension of an anchoring (or mooring) line to prevent a breakage accident by, for example, detecting a load acting on a middle contact portion, such as a roller, with which a middle portion of the anchoring line comes into contact and estimating the tension of the anchoring line based on this load. Also, for example, Japanese patent application Kokai publication No. 2005-153595 describes detecting the tension of a mooring line with a strain gauge or the like provided to a wind-up drum, and for example, Japanese patent application Kokai publication No. 2002-211478 describes detecting the tension of a mooring line after the mooring of a vessel, using a load cell mounted on a tension bar of a hand brake of a mooring winch.

The detection of the tension of a mooring line using the load cell has problems that measurement is possible only when the wind-up drum of the mooring line is secured with the hand brake and measurement is impossible when the mooring line is being wound up or out. Also, the configuration of Patent Literature 1 (Japanese patent application Kokai publication No. Hei 10-109686) has not only restrictions in the handling of the mooring line but also problems of causing load fluctuations due to the mooring line's diameter, rigidity, and angle of incidence.

In addition, for example, Japanese patent application Kokai publication No. Hei 07-232693 describes using a tension sensor (a strain gauge) attached to each hook of a dolphin on a base, as an onshore mooring line tension measurement device to obtain the tension. In this case, the tension sensor is provided on the shore side such as a base or pier, and therefore data has to be transmitted to a mooring line monitoring system typically provided on the vessel side. This case has problems of being unusable at a pier or the like where there is no tension measurement device.

In US patent application US 3 759 094 A a system for monitoring the force in a mooring cable of a single-point mooring system and transmitting from the single-point mooring system to a ship moored thereto a signal related to the measured force is described whereby said ship can disconnect from said single-point mooring system when said signal exceeds a preset maximum value.

Prior art document GB 1 241 776 A relates to mooring systems for vessels, and more particularly to apparatus and method for determining the load on a mooring line of a floating vessel.

### PRIOR ART DOCUMENT

### PATENT DOCUMENT

Patent Document 1: Japanese patent application Kokai publication No. Hei 10-109686
Patent Document 2: Japanese patent application Kokai publication No. 2005-153595
Patent Document 3: Japanese patent application Kokai publication No. 2002-211478
Patent Document 4: Japanese patent application Kokai publication No. Hei 07-232693
Patent Document 5: US 3 759 094 A
Patent Document 6: GB 1 241 776 A

### SUMMARY OF THE INVENTION

### PROBLEM TO BE SOLVED BY THE INVENTION

The present invention has been made in view of the above circumstances, and has an object to provide a mooring line monitoring system, a mooring management system, a mooring line monitoring method, and a mooring management method that are capable of predicting and forestalling breakage of a mooring line by being able to detect the tension of the mooring line with a relatively simple configuration at all times, i.e., during mooring work using the mooring line, at the completion of the mooring work, and during mooring.

### MEANS FOR SOLVING THE PROBLEM

A mooring line monitoring system of the present invention for achieving the above object includes an elongation detection device that detects an elongation of a fiber rope forming a mooring line mooring a vessel and a control device that calculates a tension of the mooring line from a detection value from the elongation detection device, wherein the elongation detection device has a line-shaped detector that detects the elongation of the fiber rope, and the fiber rope incorporates the detector inside.

According to this configuration, the tension of a mooring line is calculated not from a tension (load) applied to the mooring line formed of a fiber rope, but from a detection value from the elongation detection device, based on the relation between elongation (a ratio of elongation) and tension which is set in advance or the relation between elongation and tension which is obtained just previously. Thus, the tension of a mooring line can be calculated not only during the mooring work and at the completion of the mooring work, but also while the mooring line is mooring a vessel. This makes it possible to do the mooring work while monitoring the tension of each mooring line and therefore do the mooring work efficiently while adjusting the tension of each mooring line to a proper tension by manipulating or controlling the mooring devices such as mooring winches.

Also, the elongation detection device can detect the elongation of a particular measurement target portion of a mooring line having a detector of the elongation detection device, and therefore the tension of that measurement target portion can be calculated. Thus, it is possible to measure the tension of each part of a mooring line connected from the mooring device to a mooring member on shore (such as a bitt or a dolphin) via a mooring member on the deck (such as a bollard or a mooring wheel). Thus, tensions can be measured more accurately by considering the influence of distribution of the mooring power among the mooring members.

Since the detector is provided in the mooring line, there is no need to measure the tension of the mooring line on the shore side, and if the relation between elongation and tension is obtained in advance, the tension of the mooring line can be monitored using only the elongation detection device and the control device which are in on the vessel side. The monitoring is thus not dependent on the facility on the pier side, which makes it possible to monitor the tensions of the mooring lines at the time of mooring (during the mooring work, at the completion of the mooring work, and during mooring) even if the vessel is moored to a pier or the like with no device for measuring the tensions of the mooring lines.

In the above mooring line monitoring system, the control device may be configured to either output an alarm or output a signal when the detection value from the elongation detection device or a calculation value which is calculated from the detection value and related to a tension of the mooring line exceeds a preset alarm value (threshold). Then, the following advantageous effects can be offered.

The elongation detection device is capable of real-time tension detection even during mooring and thus can either output an alarm or output a signal based on a detection value or calculation value obtained in real time during mooring, with respect to the tension of the mooring line which changes in accordance with disturbances such as changes in tides, the cargo load state of the vessel, meteorological and hydrological conditions, and tidal currents. Thus, breakage of a fiber rope can be accurately predicted before the breakage happens, and the mooring line likely to break can be loosed by, for example, causing the mooring device to wind out the mooring line either manually or automatically based on the prediction result, thereby forestalling breakage of the mooring line.

Note that the preset alarm value may be set any time before an estimated value of the tension of the fiber rope is determined. Also, the alarm value does not necessarily have to be a fixed value, and may be a value updated based on changes in disturbances such as tides, the cargo load state of the vessel, meteorological and hydrological conditions, and tidal current or based on the deterioration level of the mooring line.

For example, a load that breaks a fiber rope may lower due to e.g., age-related deterioration of the fiber rope. Conventionally, a piece of a fiber rope which has been used for mooring for a predetermined period of time is cut off, taken off the vessel, taken back to a rope factory or the like, tested by a tensile testing apparatus to measure its breaking load, and checked for its deterioration level to determine the management method for the fiber rope.

In the above mooring line monitoring system, the control device may be configured to determine a deterioration level of the fiber rope based on a value of the elongation of the fiber rope detected by the elongation detection device and a tension value detected by a tension detection device that detects a tension of the fiber rope independently of the elongation detection device, and lower a value of the alarm value in accordance with the deterioration level. Then, the following advantageous effects can be offered.

For such reasons as age-related deterioration, the elongation of a fiber rope with respect to the same load or a load on a fiber rope with respect to the same elongation changes. In other words, the relation between a value of the elongation of a fiber rope and a tension value (load) of the fiber rope changes, and thus, the deterioration level of the fiber rope is determined from this change. Then, since a load that breaks the fiber rope lowers according to the deterioration level, the alarm value for forestalling breakage of the mooring line is lowered. Safety can be improved by such an update of the alarm value based on the deterioration level of the mooring line.

The age-related deterioration or the like of a fiber rope is estimated from a change in the elongation of the fiber rope with respect to the same load in the present system, and the following two approaches are examples of conceivable methods.
1) In a case where there is accumulation of stress-strain diagram data measured by, as described earlier, testing a piece of a fiber rope cut after use for a predetermined period of time using a tensile testing apparatus, the deterioration state and breaking load of the fiber rope can be estimated by comparison with such data.
2) In a case where no such data have been accumulated, how the stress-strain diagram shifts due to age-related deterioration or the like is estimated based on an increase in the elongation with respect to the same load or a decrease in the load with respect to the same elongation, extrapolation or the like is performed if necessary, and a breaking load point can be thereby estimated.

In the above mooring line monitoring system, the control device may be configured to warn that it is time to replace the fiber rope when the deterioration level exceeds a preset replacement timing warning value (threshold). Then, the warning allows the fiber rope to be replaced at an appropriate timing and thereby allows breakage of the fiber rope due to deterioration to be forestalled. Thus, mooring safety can be improved.

Further, in a case where a system that issues a warning to prompt work to forestall breakage of a fiber rope is provided, safer mooring line management is enabled by adjusting, according to the deterioration level of the fiber rope, the setting of an elongation alarm value (threshold) based on which a warning is issued when the fiber rope is being used in such a way that the fiber rope is stretched too much or by controlling and adjusting a winding up/out device (winch) for the fiber rope.

In the above mooring line monitoring system, the elongation detection device has a line-shaped detector that detects the elongation of the fiber rope, and the fiber rope incorporates the detector. Then, the following advantageous effects can be offered.

Since the line-shaped detectors of the elongation detection device are laid in the fiber rope itself forming the mooring line, the fiber rope can be handled in the same way as for a conventional fiber rope, and the elongation detection device does not interfere with the mooring work. When provided inside a strand, i.e., in a core or inside a rope, the line-shaped detectors are less likely to experience exogenous damage and wear, which advantageously makes the detectors less likely to deteriorate and have better durability.

Since tension data can be obtained from the detectors in the mooring lines (fiber ropes) that a vessel has for mooring, data processing can be easily performed by the mooring line monitoring system on the vessel side without obtaining tension data from the pier (or shore) side. Further, when a plurality of detectors are twisted in a plurality of measurement target portions in a fiber rope, elongations can be detected for the respective measurement target portions.

In the above mooring line monitoring system, the fiber rope may include a detector-side connector which is connected to the detector incorporated inside a strand of the fiber rope or a measurement interconnection connected to the detector and is disposed on an outer periphery of the strand of the fiber rope, a control-device-side connector which is detachably joined to the detector-side connector and is connected to a control-device-side wiring cable, and a protection member that covers the detector-side connector and the control-device-side connector along with the fiber rope. Then, the following advantageous effects can be offered.

According to this configuration, the detector is disposed in the center part of a strand and thereby protected, and is least likely to be affected by bending, stretching, and contracting of the fiber rope.

The detector-side connector and the power-side connector, which are formed by compact connectors, are disposed on the outer circumference of a strand of a fiber rope, a measurement interconnection is drawn out to the outer circumferential portion and connected to the detector-side connector, and the power-side connector is detachably joined to the detector-side connector. Thus, connection and disconnection between the measurement interconnection on the fiber rope side and a control-device-side wiring cable on the control device side can be done very easily.

Further, covering the detector-side connector and the power-side connector with the protection member (such as a fiber fabric cover) allows prevention of breakage of the connection portion during operation. Also, when made of a flexible material, the protection member is not bulky during storage of the fiber rope and does not damage surrounding fiber ropes, thus minimizing decrease in the handleability and fiber rope strength.

In the above mooring line monitoring system, the detector incorporated inside a strand of the fiber rope or a measurement interconnection connected to the detector may be connected to a data processing device provided inside or separately from a mooring device that winds up the fiber rope, and the data processing device may be configured to convert an analog signal transmitted from the detector into a digital signal and transmits the digital signal to the control device in a wired or wireless manner. Then, the following advantageous effects can be offered.

When these detectors or measurement interconnections are directly connected to the data processing device, not via the connectors such as the detector-side connector and the power-side connector, the problem of durability of the connectors and the protection cover for protecting them can be avoided. Moreover, a crew can be saved the trouble of connecting the connectors together at the time of mooring work, the trouble being manual works such as, for example, opening and closing the protection cover, detachment and attachment of a watertight cap, and detachment and attachment of the connectors. Thus, the mooring line monitoring system can be a fully-automated system that requires no intervention of the crew.

Alternatively, in the above mooring line monitoring system, the detector incorporated inside a strand of the fiber rope or a measurement interconnection connected to the detector may be connected to a data processing device provided inside or on a surface of the fiber rope, and the data processing device may be configured to convert an analog signal transmitted from the detector into a digital signal and transmit the digital signal to the control device either directly or via a repeater provided inside or separately from a mooring device that winds up the fiber rope, either in a wired manner through a wired signal transmission line provided inside the fiber rope or in a wireless manner using a radio signal transmitter provided inside the fiber rope. Then, the following advantageous effects can be offered.

Thus using the data processing device as compact as to be provided inside or on the surface of the fiber rope, analog data measured by the detectors disposed only at locations to be measured can be converted into digital signals resistant to disturbance through short-distance wired transmission, thus allowing more accurate detection of the elongation of the fiber rope. Also, wireless transmission of such digital signals to a repeater or the control device eliminates the need to provide a wired transmission path necessary for wired transmission and also eliminates the risk of the wired transmission path breaking.

In the above mooring line monitoring system, the detector may be disposed in each of a first half of the fiber rope which extends from a lengthwise center of the fiber rope to one end of the fiber rope and a second half of the fiber rope which extends from the center to another end of the fiber rope, and each of the detectors or measurement interconnections connected to the respective detectors may be drawn out from between the detector disposed in the first half and the detector disposed in the second half. Then, the following advantageous effects can be offered.

The mooring line is divided into a first half and a second half to have two sensor insertion regions each having the detector, and the detectors or measurement intersections are drawn out from the center. This enables recovering of the mooring line by using the first half of the mooring line first and then after several years switching the first and second halves of the mooring line to use the second half.

In addition, a mooring management system of the present invention for achieving the above-described object comprises the above mooring line monitoring system, and the control device is configured to control a mooring device that winds up the mooring line so that a tension of the mooring line obtained by the mooring line monitoring system reaches a preset target tension at at least one of the following timings: during mooring work using the mooring line, at the completion of the mooring work, and during mooring.

According to this configuration, the tension of each mooring line obtained from the mooring line monitoring system can be used for the adjustment of the tension of the mooring line; thus, not only is breakage of the mooring lines forestalled, but also the mooring state is improved by the adjustment of the tensions of the respective mooring lines to allow the moored vessel not to move so much, keeping the vessel in a better moored state from hour to hour against disturbances such as meteorological and hydrological conditions, the cargo load state of the vessel, and waves incident on the vessel.

In addition, a mooring line monitoring method of the present invention for achieving the above-described object is a method characterized in that the method comprising: measuring an elongation of a fiber rope forming a mooring line when the mooring line is used to moor a vessel by using an elongation detection device; and calculating a tension of the mooring line from a detection value from the elongation detection device.

According to this mooring line monitoring method, the tension of a mooring line is calculated not from a load applied to the mooring line, but from a detection value from the elongation detection device based on the elongation-tension relation set in advance or the elongation-tension relation obtained just previously. Thus, when mooring a vessel to the shore such as a pier, it is possible to accurately calculate the tension of a mooring line, not only during the mooring work and at the completion of the mooring work, but also while the mooring line is mooring the vessel.

In addition, a mooring management method of the present invention for achieving the above-described object is a method characterized in that when a vessel is moored using a plurality of mooring lines, for each of the mooring lines, a tension of the mooring line is calculated from a detection value measured by an elongation detection device that is twisted into the mooring line and measures an elongation of a fiber rope forming the mooring line, and for each of the mooring lines, a mooring device that winds up the mooring line is controlled so that the calculated tension of the mooring line reaches a preset corresponding target tension at at least one of the following timings: during mooring work using the mooring line, at the completion of the mooring work, and during mooring.

According to this mooring management method, not only is breakage of each of the mooring lines forestalled, but also the moored state is improved by adjustment of the tensions of the respective mooring lines to allow the moored vessel not to move so much, thereby keeping the vessel in a better moored state from hour to hour against factors such as meteorological and hydrological conditions, the cargo load state of the vessel, and waves incident on the vessel.

### EFFECTS OF THE INVENTION

According to the mooring line monitoring system, the mooring management system, the mooring line monitoring method, and the mooring management method of the present invention, the tension of each mooring line can be detected to predict and forestall breakage of the mooring line with a relatively simple configuration at all times, i.e., during mooring work using the mooring line, at the completion of the mooring work, and during mooring.

### BRIEF DESCRIPTION OF THE DRAWINGS

[Fig. 1] Fig. 1 is a plan view schematically showing the configurations of a mooring line monitoring system and a mooring management system of an embodiment according to the present invention.
[Fig. 2] Fig. 2 is a diagram schematically showing the arrangement of mooring devices and mooring members on the deck of a vessel, mooring members on a pier, elongation detectors, and tension detection devices.
[Fig. 3] Fig. 3 is a diagram schematically showing the arrangement of the tension detection device on the mooring device and the arrangement of the elongation detectors on a mooring line.
[Fig. 4] Fig. 4 is a diagram schematically showing the configuration of line-shaped detectors of an elongation detection device.
[Fig. 5] Fig. 5 is a diagram showing an example of the relation between an elongation calculated from a change in inductance detected by the detectors of the elongation detection device and an elongation which is an extension of the detectors obtained based on dimensional measurement.
[Figs. 6] Fig. 6 is a diagram showing the position of the detector of the elongation detection device in a strand, part (a) being a diagram in which the detector is disposed in a core of the strand, part (b) being a diagram in which the detector is disposed in an intermediate layer of the strand, and part (c) being a diagram in which the detector is disposed in an outer layer of the strand.
[Fig. 7] Fig. 7 is a diagram illustrating the relation between the length of a detector of the elongation detection device and the length of a fiber rope.
[Fig. 8] Fig. 8 is a diagram illustrating connection portions between detector interconnections and control-device-side wiring cables in a fiber rope including the detectors of the elongation detection device and how the connected portions are protected.
[Fig. 9] Fig. 9 is a diagram showing the relation between fiber rope elongation (dimensional measurement) and strand elongation (sensor data) for each measurement.
[Fig. 10] Fig. 10 is a diagram showing the relation between load and strand elongation (sensor data), corresponding to Fig. 9.
[Fig. 11] Fig. 11 is a diagram showing the relation between load and fiber rope elongation (dimensional measurement), corresponding to Figs. 9 and 10.
[Fig. 12] Fig. 12 is a diagram showing an example time series of strand elongation (sensor data), showing the relation between the strand elongation (sensor data) and outputting of an alarm (or a signal).
[Fig. 13] Fig. 13 is a schematic diagram showing the relation between the strand elongation (sensor data), breaking load, and alarming load.
[Fig. 14] Fig. 14 is a diagram schematically showing an example of the arrangement of the tension detection device with respect to a mooring device and the arrangement of the detectors for the elongations of mooring lines, the example being different from the one in Fig. 3.
[Fig. 15] Fig. 15 is a diagram schematically showing an example of the arrangement of the tension detection device with respect to a mooring devices and the arrangement of the detectors for the elongations of mooring lines, the example being different from the ones in Figs. 3 and 14.
[Fig. 16] Fig. 16 is a schematic diagram showing the relation between fiber rope elongation and load, which relation changes depending on the level of deterioration due to aging.
[Fig. 17] Fig. 17 is a diagram showing an example time series of strand elongation, showing the relation between the strand elongation and outputting of an alarm (or a signal) with the level of deterioration being reflected.
[Fig. 18] Fig. 18 is a diagram showing an example of control flow for adjustment of an alarm value and determination of the timing for fiber rope replacement, reflecting the level of deterioration.

### MODES FOR CARRYING OUT THE INVENTION

Hereinbelow, a mooring line monitoring system, a mooring management system, a mooring line monitoring method, and a mooring management method of an embodiment according to the present invention are described with reference to the drawings.

Although a "three-strand rope" is used as an example of a fiber rope forming a mooring line herein, the fiber rope may be of other structures, such as, for example, a six-strand, eight-strand, or 12-strand rope or a double braided rope.

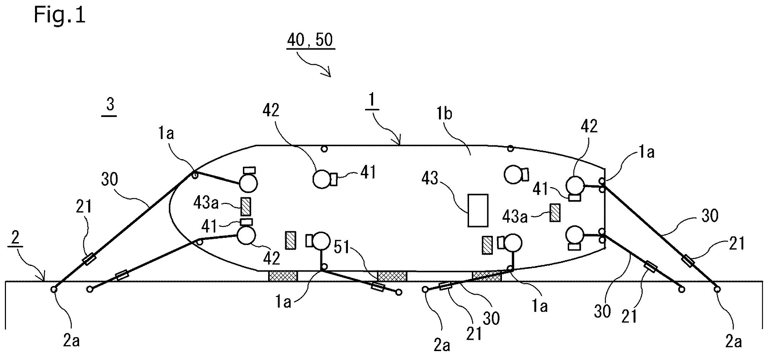

As shown in FIGs. 1 to 3, a mooring line monitoring system 40 of an embodiment according to the present invention is a system that monitors the tensions T of mooring lines 30 while a vessel 1 floating on a water surface 3 is pulled alongside a pier 2 and moored to the pier 2 with the mooring lines 30 with fenders 51 interposed therebetween.

A mooring management system 50 of an embodiment according to the present embodiment is a system that includes the mooring line monitoring system 40 and adjusts and controls the tensions of the mooring lines 30 by causing a control device 43 to control mooring devices (such as mooring winches) 42 that wind up the mooring lines 30, based on the tensions T of the mooring lines 30 obtained by the mooring line monitoring system 40. Preferably, the mooring management system 50 includes monitor devices 43a that transmit and receive data by wireless communication so that the same mooring data as that in the control device 43 may be viewed during the manipulation of the mooring devices 42. It is also preferable that data on the mooring lines 30 be shared on the shore side as well using the monitor device 43a. The monitor device 43a may be a monitor provided in e.g. a control room on the pier, may be a mobile monitor such as a smartphone, or may be both.

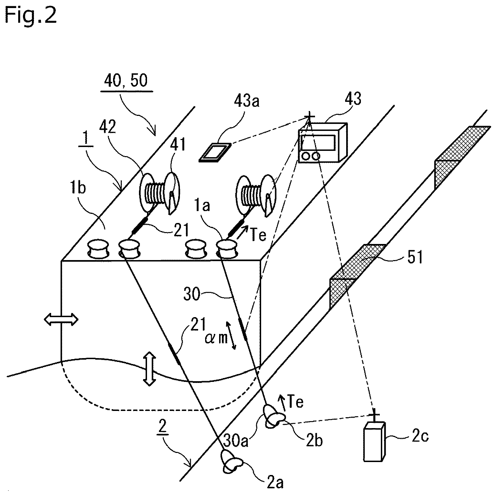

In the state shown in Fig. 1 in which the vessel is moored and the state shown in Fig. 2 in which mooring work is being performed, the fenders 51 are interposed between the vessel 1 and the pier 2. Six mooring lines 30 extend from six mooring devices 42 out of the eight mooring devices 42 provided on a deck 1b, and the orientations of these mooring lines 30 are bent around mooring members 1a on the deck 1b such that a loop 30a at the end of each mooring line 30 is fit around a corresponding mooring member 2a called e.g. a "bitt" on the pier 2 side and secured. When the mooring lines 30 are wound up by the respective mooring devices 42 in this state, the vessel 1 is pulled to the pier 2 against the fenders 51 and thereby brought to the moored state shown in Fig. 1.

Detectors (elongation sensors) 21 of an elongation detection device 20 that detect an elongation αm of a fiber rope forming the mooring line 30 (hereinafter, a "mooring line" and a "fiber rope" are both denoted by reference number "30") are twisted into a measurement target site in each mooring line 30. Details will be described further below about the elongation detection device 20.

Apart from the elongation detection device 20, a tension detection device (such as a portable tensiometer) 41 that detects the tension T of the mooring line 30 is provided to each mooring device 42. The mooring line monitoring system 40 does not necessarily have to be provided with the tension detection devices 41 in a case where the tensions T detected by the tension detection devices 41 are not used because e.g. the deterioration levels δ of the mooring lines 30 are not calculated.

The tension detection device 41 may be, for example, a tensiometer or the like provided to the mooring device 42 such as a mooring winch of a publicly known art, or may be a tension detection device of a publicly known art such as a tensiometer 2b provided to the mooring member 2a on the pier 2 side. Also, the tension detection device 41 does not necessarily have to be a fixedly mounted tensiometer, but may be a portable tensiometer (such as one available on the market). Furthermore, a fiber rope 30 that includes the detectors 21 used in the mooring line monitoring system 40 of the present invention and has been validated for its ability to calculate tensions may be used.

To use data from the tensiometer 2b on the pier 2, the data is preferably transmitted to the control device 43 on the vessel 1 side wirelessly. In this case, the tensiometer 2b and the control device 43 may be configured to perform direct transmission and reception wirelessly, but as shown in Fig. 2, a data management device 2c may be provided to perform radio relaying and, if necessary, primary processing on data so that data obtained by the primary processing may be transmitted to the control device 43 via the data management device 2c.

Examples of the mooring members 1a on the deck of the vessel 1 include "bollards," "mooring wheels," "fairleaders," and "cleats." A "bollard" is a columnar pillar for tying down a rope on the deck and is often used in pairs. A "mooring wheel" is a fitting with a circular hole to pass a rope at the edge of the deck in order to prevent the rope forming the mooring line 30 from wearing thin by directly coming into contact with a corner of the deck, and also to keep the rope from wandering on the deck freely. A "fairleader" has the same function as a "mooring wheel" and includes a roller at its lower side or at its lower and upper sides, the roller being configured to rotate as a rope moves to prevent the rope from wearing thin. A "cleat" is almost like a "mooring wheel," but does not have a hole and has its upper portion open so that a rope can be put over the upper part, not through a hole.

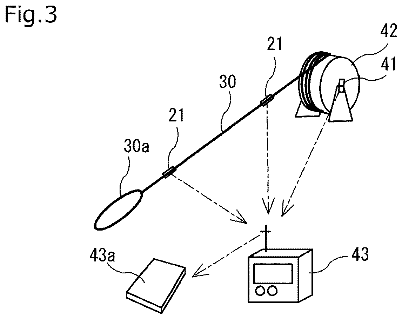

Each mooring member 2a on the pier 2 side is a large protrusion made of steel and is called a "bitt" or a "mooring bitt." To moor a vessel, as shown in Figs. 2 and 3, the loop (or eye) 30a at an end of the mooring line 30 is put around the mooring member 2a. Upper portions of many mooring members 2a are curved toward the shore side so that the loop 30a at the end will not come off easily.

A dolphin is an anchorage facility, such as a sea berth, built in a water area in a harbor by driving and securing piles or the like into the seabed away from shore. An upper portion of the pile is exposed from the water surface to be able to receive a mooring line.

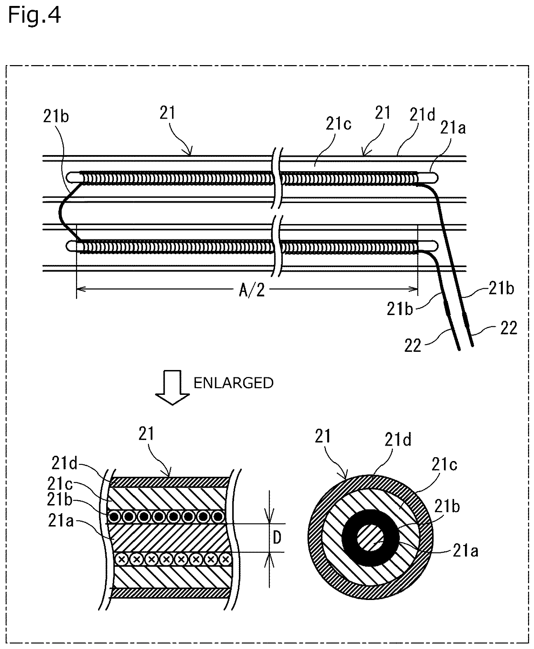

Next, a description is given on the elongation detection device 20 used in this mooring line monitoring system 40. The elongation detection device 20 has the line-shaped detectors 21 that detect the elongation βm of the fiber rope 30. As shown in Fig. 4, the detector 21 includes a coil core 21a, a coil winding 21b, an insulating resin coating 21c, an electromagnetic wave shield layer 21d, and if necessary, an insulating resin coating (not shown in FIG. 4) on the outer surface of the electromagnetic wave shield layer.

The coil core 21a is a core reinforcing fiber formed of aramid fiber or the like, and the coil winding 21b is wound around the coil core 21a in the range of the length A of the coil core 21a. The coil winding 21b is a metallic conducting wire and is surrounded by the insulating resin coating 21c. Further, the insulating resin coating 21c is surrounded by the electromagnetic wave shield layer 21d of a braided metal wire structure.

When a tension T (load F) acts on the detector 21, the coil core 21a and the coil winding 21b stretch, changing the inductance L of the coil winding 21b. This change in the inductance L is detected based on a change in a current flowing through the coil winding 21b, and the elongation αm of the detector 21 can be obtained from a detected inductance Lm, based on the relation between the inductance L and the elongation α of the detector 21 measured in advance.

Since L=(µ×N×N×S/A) where µ is the magnetic permeability of the coil core 21a, S is the cross-sectional area of the coil core 21a (S=2×π×D×D/4), N is the number of turns of the coil winding 21b, and A is the coil length, the relation between the inductance L and the coil length A is defined.

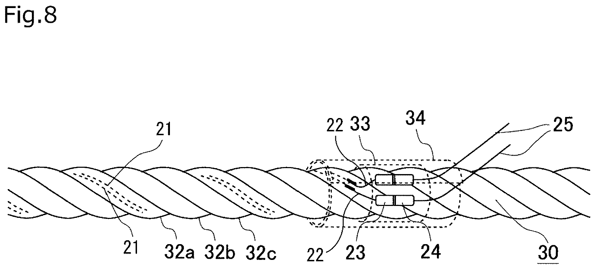

As shown in Figs. 4 and 8, two line-shaped detectors 21 each formed by winding a single coil winding 21b around the coil core 21a in a coil forming manner are arranged in parallel, and the coil windings 21b drawn out from the two line-shaped detectors 21 are electrically connected to each other at their one ends. At the other ends, measurement interconnections 22 connected to the respective coil windings 21b of the two line-shaped detectors 21 are drawn out and connected to a measurement device (not shown) with control-device-side wiring cables 25 via primary-side compact connectors (measurement-unit-side connectors) 23 and secondary-side compact connectors (control-device-side connectors) 24.

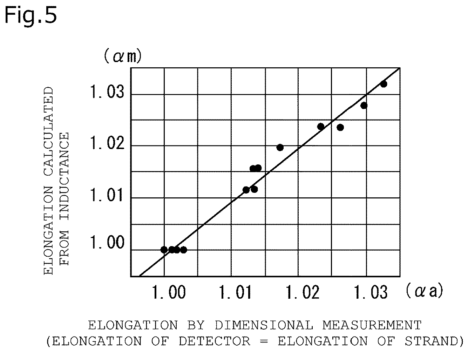

Fig 5 shows an example relation between the elongation αm calculated from the detected inductance Lm and the elongation αa obtained by dimensional measurement. According to this, the elongation αm calculated from the inductance Lm almost has a linear relation with (is proportional to) the elongation αa obtained by dimensional measurement, and measurement results obtained through calculation of the elongation αm from the inductance Lm of the detector 21 show that the elongation αm of the detector 21 and the elongation αa based on dimensional measurement have a very favorable correlation with each other. The following continues with explanation, regarding the elongation αm calculated from the inductance Lm as the elongation (strand elongation) αm of the detector 21.

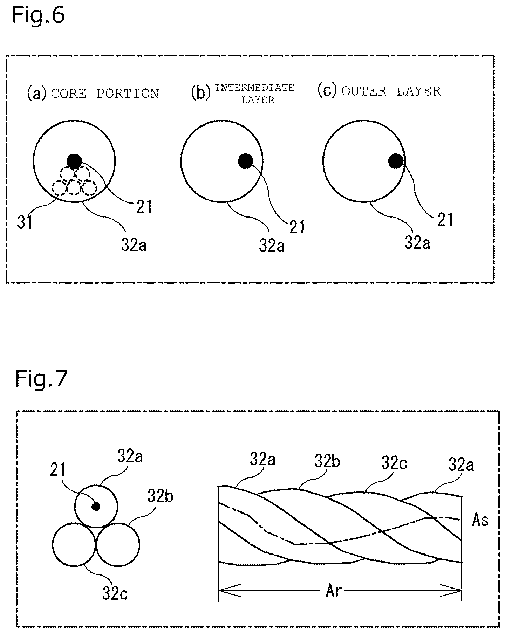

Then, as shown in part (a) of Fig. 6, the elongation detection device 20 is formed as follows. The detectors 21 are twisted together with yarns 31 each of which is made by twisted filaments, and a strand 32a is thereby formed. This strand 32a provided with the detectors 21 is twisted together with other strands 32b, 32c to form the fiber rope 30. In other words, the elongation detection device 20 has the line-shaped detectors 21, and the strand 32a provided with the detectors 21 at its core portion is twisted together with the other strands 32b, 32c to form the fiber rope 30.

Preferably, the detectors 21 are provided at the core portion as shown in part (a) of Fig. 6, rather than in an intermediate layer of the strand 32a as shown in part (b) of Fig. 6 or in an outer layer of the strand 32a as shown in part (c) of Fig. 6. This configuration allows the amount of stretch to be almost the same for the detectors 21 and the strand 32a. In addition, when the strand 32a is twisted together with the other strands 32b, 32c to form the fiber rope 30, the core part of the twisted strand 32a stretches less than the outer layer or the intermediate layer does, compared with the amount of stretch of the strand 32a. Thus, advantageously, the detectors 21 are more durable when disposed at the core part.

Further, as shown in Fig. 7, the length As of the strand 32a twisted in the fiber rope 30 (the length along the dot-and-dash line in Fig. 7) is longer than the straight length Ar of the fiber rope 30. The elongation detection device 20 thus measures the elongation α of the strand 32a and therefore cannot directly measure the elongation β of the fiber rope 30. However, by e.g. measurement of both of the elongations α and β in advance, the elongation βm of the fiber rope 30 can be calculated based on a measurement value αm of the elongation of the fiber at the core part of the strand 32a (=the elongation of the detectors 21) obtained by the elongation detection device 20.

The detectors 21 may be used in a length exceeding 100 meters when necessary. Also, in addition to detecting the inductance, the detectors may be used to detect e.g. an electrical resistance value (direct-current or alternate-current resistance) of the coil winding 21b or the electromagnetic wave shield layer 21d or the capacitance value between the coil winding 21b and the electromagnetic wave shield layer 21d, if necessary.

As shown in Fig. 8, in a part where the control-device-side wiring cables 25 are led out from the detectors 21 twisted in the strand 32a of the fiber rope 30, there are the measurement interconnections 22, the primary-side compact connectors (detector-side connectors) 23, secondary-side compact connectors (control-device-side connectors) 24, the control-device-side wiring cables 25, a cushioning material 33, a fiber belt cover 34, a position fixing strap (not shown), and the like, and they are configured as follows to facilitate the connecting work on the vessel.

Each measurement interconnection 22 is connected to the coil winding 21b of the detector 21 twisted in the strand 32a of the fiber rope 30 and is surrounded and protected by the fibers forming the strands 32a, 32b, 32c of the fiber rope 30. Also, being disposed at a center part of a strand of the fiber rope 30, the measurement interconnection 22 is least affected by the bending, stretching, and contracting of the fiber rope 30.

The measurement interconnection 22 is connected to the primary-side compact connector 23. Meanwhile, the control-device-side wiring cable 25 is connected to the secondary-side compact connector 24. Then, the secondary-side compact connector 24 is detachably joined to the primary-side compact connector 23. The primary-side compact connector 23 and the secondary-side compact connector 24 are both disposed on the outer peripheries of the strand 32a, 32b, 32c of the fiber rope 30. This makes connection and disconnection between the detectors 21 on the fiber rope 30 side and the control device very easy. The measurement interconnections 22 shown in Fig. 8 are only of short distances (parts exposed to the outside of the strands) that are near the detector-side connectors.

The primary-side compact connectors 23 and the secondary-side compact connectors 24 are both disposed on the outer circumference of the fiber rope 30, and the fiber belt cover 34 surrounds a part from the detectors 21 to the primary-side compact connectors 23 and the secondary-side compact connectors 24, such that the positions of the detectors 21 or the primary-side compact connector 23 and the secondary-side compact connector 24 may be visible from outside.

Thus, being covered by the fiber belt cover 34 which is, for example, approximately 4 mm in thickness, the connection parts between the primary-side compact connectors 23 and the secondary-side compact connectors 24 are made resistant to compression and well protected.

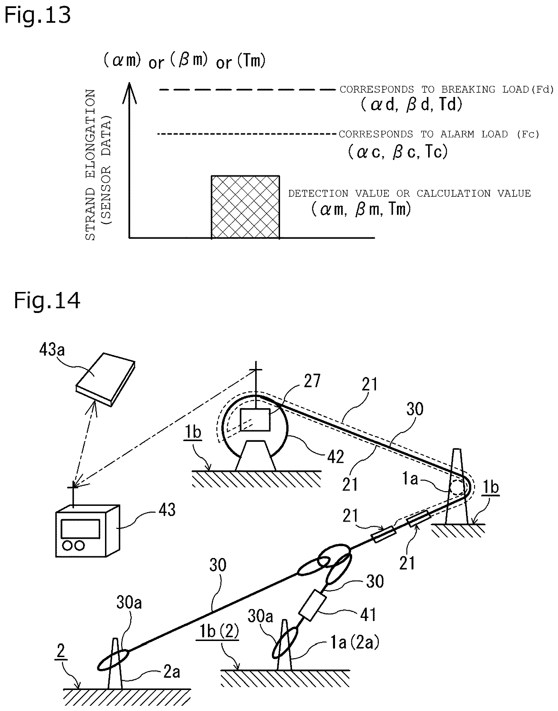

Although the primary-side compact connectors 23 and the secondary-side compact connectors 24 are used in the above-described configuration shown in Fig. 8, a configuration without such intermediate connectors are also possible, as shown Fig. 14. In this configuration, the detectors 21 incorporated inside the strand 32a of the fiber rope 30 are connected, via the measurement interconnection 22 if necessary, to a data processing device 27 provided to the mooring device 42 that winds up the fiber rope 30, and the data processing device 27 converts analog signals transmitted from the detectors 21 into digital signals and transmits the digital signals to the control device 43 in a wired or wireless manner.

In this configuration in which the detectors 21 are connected, via the measurement interconnections 22 if necessary, directly to the data processing device 27 without the intervention of the primary-side compact connectors 23 and the secondary-side compact connectors 24, problems concerning the durability of the connectors 23, 24 and the durability of the fiber belt cover (protection cover) 34 protecting the connectors 23, 24 can be avoided. The above configuration also saves a crew the trouble of connecting the connectors 23, 24 during the mooring work, such as e.g. opening and closing the fiber belt cover 34, attachment and detachment of a watertight cap, and attachment and detachment of the connectors 23, 24. Also in a case where the detectors 21 are connected via the connectors 23, 24 and if necessary the measurement interconnections 22, if the detectors 21 are connected to the data processing device 27 provided to the mooring device 42, a crew can be saved the trouble of connecting the connectors 23, 24 to each other since there is no need to attach and detach the connectors 23, 24 during the mooring work. As a result, the mooring line monitoring system 40 can be fully automated, not requiring a hand from a crew.

In this fully automated system without human intervention, in addition to the detectors 21 being twisted into the fiber rope 30 and the data processing device 27 to which the detectors 21 are connected via the measurement interconnections 22 if necessary being installed in the mooring device 42, the control device 43 is preferably configured as a continuous tension measurement system that, at the time of mooring work, automatically starts data measurement once the mooring work starts, automatically analyzes the measurement data, calculates the tension of each mooring line 30, and displays the calculated tension in real time. Preferably, the data processing device 27 is as small as a laptop PC and is mounted and incorporated into the mooring device 42.

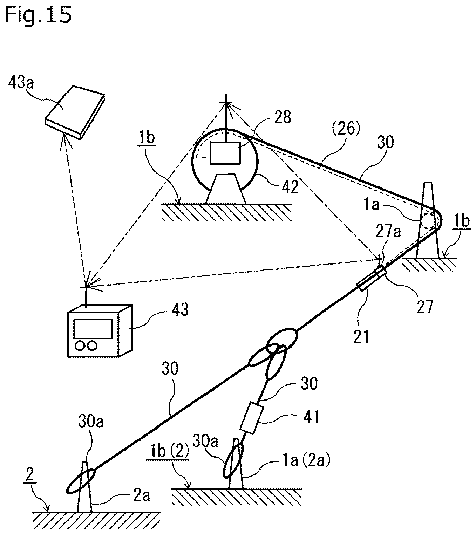

Alternatively, as shown in Fig. 15, in the mooring line monitoring system 40, the detectors 21 incorporated inside the strand 32a of the fiber rope 30 are connected to the data processing device 27 provided inside or on the surface of the fiber rope 30 via, if necessary, the measurement interconnections 22.

This data processing device 27 converts analog signals transmitted from the detectors 21 to digital signals. The digital signals are transmitted to the control device 43 in a wired or wireless manner. In a wired manner, the digital signals are transmitted via a wired signal transmission line 26 provided inside the fiber rope 30, and in a wireless manner, the digital signals are transmitted by means of radio from a radio signal transmitter 27a provided inside or on the surface of the fiber rope 30. The radio signal transmitter 27a is preferably incorporated in the data processing device 27. The digital signals are then transmitted to the control device 43 either directly or via a repeater 28 provided inside or separately from the mooring device 42 that winds up the fiber rope 30.

In this way, analog data measured by the detectors 21 disposed only at locations to be measured can be converted into digital signals resistant to disturbances through short-distance wired transmission using the data processing device 27 which is as compact as to be provided inside or on the surface of the fiber rope 30, thus allowing more accurate detection of the elongation βm of the fiber rope 30. Further, wirelessly transmitting the digital signals to the repeater 28 or the control device 43 eliminates the need to provide a wired transmission path necessary for wired transmission and also eliminates the risk of the wired transmission path breaking.

Further, the detectors 21 are disposed in a first half which extends from a lengthwise center of the fiber rope 30 to one end of the fiber rope 30 and a second half which extends from the center to the other end. Then, the respective detectors 21 or the measurement interconnections 22 connected to the respective detectors 21 are drawn out from between the detector 21 disposed in the first half and the detector 21 disposed in the second half. This configuration allows the portions of the detectors 21 or of the measurement interconnections 22 drawn out from the fiber rope 30 to be disposed almost at the center of the fiber rope 30, and therefore enables recovering of the mooring line 30 by using the first half of the mooring line (fiber rope) 30 first and then after several years switching the first and second halves of the mooring line to use the second half.

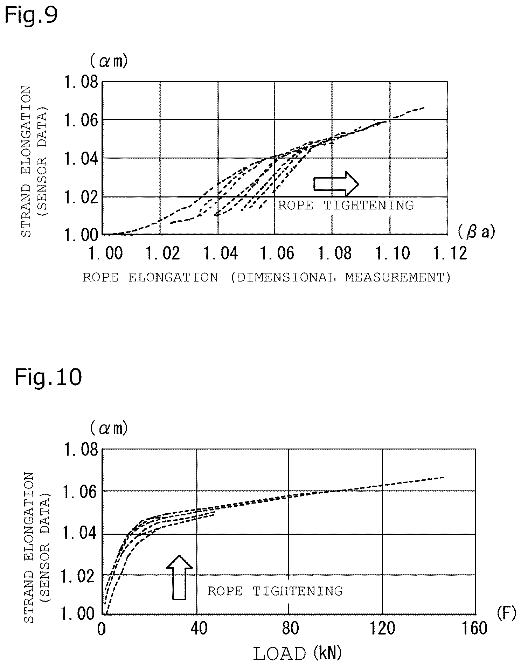

Next, using the fiber rope 30, a description is given on the relation between the elongation βm or the load F of the fiber rope obtained by dimensional measurement and the strand elongation αm which is sensor data obtained from the detectors 21. In the example shown in Figs. 9 to 11, the magnitude of the load F as a percentage of load relative to the rope breaking load is increased as follows: 15% for the first and second rounds, 30% for the third and fourth rounds, 45% for the fifth and sixth rounds, and 60% for the seventh and eighth rounds. Then for the ninth round, the load F is increased to breakage.

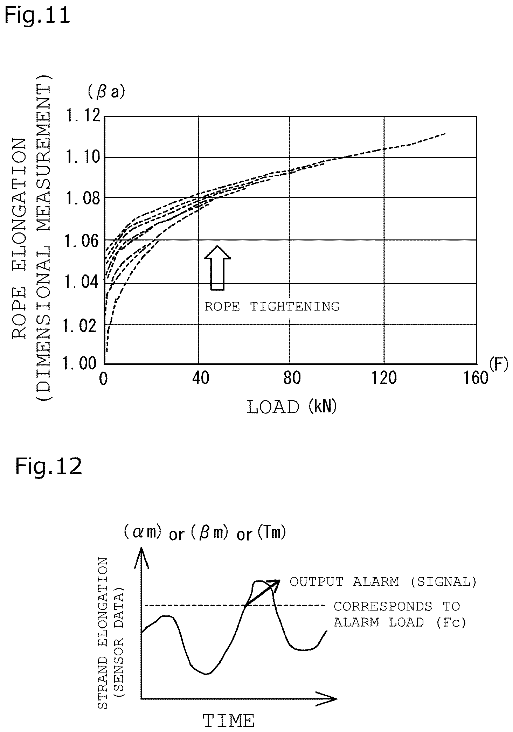

Fig. 9 shows an example relation between the fiber rope elongation (dimensional measurement) βa and the strand elongation (sensor data) αm. Fig. 10 shows the relation between the load F and the strand elongation αm, corresponding to Fig. 9. Fig. 11 shows the relation between the load F and the fiber rope elongation βa, corresponding to Figs. 9 and 10.

In Figs. 9 to 11, when the fiber rope elongation βa or the load F is small, the tightening of the fiber rope changes, and thus the curves change depending on the maximum load history. Thus, in order to monitor the fiber rope elongation βa or the load F based on the strand elongation αm, the history data on the load F is necessary while the load F is small. However, when the load F is large and the strand elongation αm is approximately 1.05 or more, the relation between the strand elongation αm and the fiber rope elongation βa or the load F is almost linear. Thus, this shows that the strand elongation αm is well usable as an estimation value used for determining whether an alarm value is exceeded, the alarm value being for issuing an alarm or outputting a signal before breaking tension is reached.

Although not shown, experiments were also conducted by setting the magnitude of the load F to 30% for the first to fourth rounds and to 30% for the fifth round after a rope loosening. In these experiments, the curves after the first and second rounds were affected by the tightening of the rope, but after the rope's tightening is stabilized, the curves showed a tendency of settling down to certain curves. When the rope was intentionally loosened after the fourth round, the curve changed and exhibited hysteresis. Although the fiber rope elongation (dimensional measurement) βa and the strand elongation (sensor data) αm are not aligned on a straight line, the phenomenon of this portion corresponds to "structural stretch" (twist tightening).

Next, a description is given on how the mooring line monitoring system 40 monitors the mooring lines 30 and outputs an alarm or signal. In the mooring line monitoring system 40, fiber ropes in each of which the above-described line-shaped detectors 21 are twisted are used as the mooring lines 30. Thus, the mooring line monitoring system 40 includes the elongation detection devices 20 that detect the elongations βm of the fiber ropes forming the mooring lines 30 when the vessel 1 is moored to e.g. the pier 2 using the mooring lines 30.

The mooring line monitoring system 40 is configured also including the control device 43 that calculates the tension Tm of each mooring line 30 based on a detection value βm from the elongation detection device 20. It is also possible to calculate the tension Tm of the mooring line 30 directly from the strand elongation αm without calculating the fiber rope elongation βm from the strand elongation αm. Although the following description uses the strand elongation αm as a detection value obtained by the elongation detection device 20, the fiber rope elongation βm calculated from the strand elongation αm may be used instead of the strand elongation αm.

According to this configuration, not the load F applied to the fiber rope 30 but the relation between the strand elongation αm and the tension Tm which is set in advance is used. Specifically, for example, a database of the relation between the strand elongation αm and the tension Tm obtained by experiment beforehand, like the one shown in Fig. 10, may be created and stored as e.g. map data M1, and the map data M1 is referred to using the strand elongation αm obtained during the mooring work to calculate the tension Tm. In this way, the tension Tm can be calculated without the tension detection device 41 (or 2b).

Alternatively, based on the relation between the strand elongation αm and the tension Tm obtained just previously, the tension Tm of each mooring line 30 is calculated from the detection value αm from the elongation detection device 20. In this case, for example, the strand elongation αm obtained by the elongation detection device 20 and the tension Tm obtained by the tension detection device 41 (or the tensiometer 2b) during the mooring work may be used to create new map data M2 or modify or update the map data M1, creating newest map data Mnew in advance (of when the tension Tm is calculated).

Then, with reference to the map data Mnew, the tension Tm of the mooring line 30 is calculated from the strand elongation αm obtained during the mooring work. Although the tension detection device 41 (or the tensiometer 2b) is used in this case, the relation between the strand elongation αm and the tension Tm does not need to be obtained by experiment in advance to create a database such as the map data M1 and stored.

According to the above configurations, the tension Tm of the mooring line 30 is calculated from the strand elongation αm which is a detection value from the elongation detection device 20; therefore, the tension Tm of the mooring line 30 can be calculated accurately not only during the mooring work and at the completion of the mooring work, but also while the mooring line 30 is mooring the vessel. Also, this elongation detection device 20 can detect the strand elongation αm of a measurement target portion of the fiber rope 30 where there is the detectors 21 of the elongation detection device 20, and thus the tension Tm of the measurement target portion can be calculated more accurately.

Also, the control device 43 is configured to either output an alarm or output a signal if the detection value αm from the elongation detection device 20 or the calculation values βm, Tm related to the tension of the mooring line 30 calculated from the detection value αm exceed preset alarm values αc, βc, Tc. As the detection value from the elongation detection device 20 or the calculation value, the strand elongation αm or the elongation βm of the fiber rope 30 calculated from the strand elongation αm may be used. Also, the tension Tm calculated from the strand elongation αm or the elongation βm of the fiber rope 30 may be used.

In general, even in a state where the vessel 1 is moored to the pier 2, the tension T of each mooring line 30 is affected by not only relatively long-term changes such as the tides, swells, and the cargo load state of the vessel, but also relatively short-term changes such as natural waves lapping against the pier 2 and waves from a vessel sailing nearby. In the short term, the tension T of the mooring line 30 is greatly affected by fluctuations due to the unsteadiness of the vessel's body of the vessel 1 caused by such waves, and fluctuates with time as exemplified in Fig. 12.

Thus, as shown in Fig. 13, with these temporal fluctuations taken into consideration, a strand elongation αd corresponding to a breaking load Fd is set, and an alarm load Fc is set for this, and an alarm value αc corresponding to the alarm load Fc is set. Instead of the strand elongation αd and the alarm value αc, an elongation βd and an alarm value βc of the fiber rope 30 or a tension Td and an alarm value Tc may be used.

The preset alarm values αc, βc, Tc may be set any time before the determination and do not necessarily have to be fixed values and may be updated based on disturbance factors such as meteorological and hydrological conditions and the deterioration level of the mooring line 30. Also, the alarm may be auditory, such as a buzzer or an audio message, or visual, such as blinking of a red lamp. Signals conceivable as the above signal include a signal that activates a different alarm device and a signal used to control the mooring device 42 that winds up the mooring line 30.

In a mooring line monitoring method of an embodiment according to the present invention, when the vessel 1 is moored to the pier 2 using the mooring lines 30, the elongation detection device 20 detects the elongation βm of the fiber rope forming each mooring line 30, and the tension Tm of the mooring line 30 is calculated from the detection value αm (or βm) from the elongation detection device 20. Although the following description uses the strand elongation αm, the fiber rope elongation βm may be used instead of the strand elongation αm.

According to this mooring line monitoring method, the tension Tm of the mooring line 30 is calculated not from the tension T applied to the fiber rope 30, but from the detection value αm from the elongation detection device 20 based on the relation between the strand elongation αm and the tension Tm which is preset or the relation between the strand elongation αm and the tension Tm which is obtained just previously. Thus, the tension Tm of the mooring line 30 can be accurately calculated not only during the mooring work and at the completion of the mooring work, but also while the mooring line 30 is mooring the vessel.

In this mooring line monitoring method, an alarm or a signal may be outputted when the measured elongation αm exceeds the preset alarm value αc. Thus, with a relatively simple configuration, detection of the tension Tm of the mooring line 30 allows detection of a sign of breakage of the fiber rope 30, and breakage of the mooring line 30 can therefore be predicted and forestalled.

While the elongation αm is used as an alarm of breakage in this method, in the method in which the tension Tm of the mooring line 30 is calculated from the detection value αm from the elongation detection device 20, the accuracy of the calculated tension Tm is high for loads which are 30% to 50% or higher of the magnitude of a designed allowable load. Also, when the fiber rope 30 is made of strong fiber such as aramid fiber, the elastic modulus is stable, thus allowing relatively better accuracy.

The mooring line monitoring system 40 may be a system that takes the deterioration level δ of the fiber rope 30 into account. In this case, the mooring line monitoring system 40 is configured as follows. Specifically, the control device 43 determines the deterioration level δ of the fiber rope 30 based on the value of the elongation βm of the fiber rope 30 detected by the elongation detection device 20 and the value of a tension (load) Tmm detected by the tension detection device 41 that detects the tension T of the fiber rope 30 independently of the elongation detection device 20, and lowers the alarm value βc in accordance with the deterioration level δ.

Specifically, the mooring line monitoring system 40 includes the elongation detection devices 20 each of which detects the value of the elongation βm of the fiber rope 30, the tension detection devices 41 each of which detects the tension T of the fiber rope 30 independently of the elongation detection device 20, and the control device 43 that determines the deterioration level δ of the fiber rope 30 based on the value of the elongation βm of the fiber rope 30 detected by the elongation detection device 20 and the value of the tension (load) Tmm detected by the tension detection device 41 and lowers the value of the alarm value βc in accordance with the deterioration level δ.

In other words, the mooring line monitoring method performed by the mooring line monitoring system 40 has a step of causing the elongation detection device 20 to detect the value of the elongation βm of the fiber rope 30, a step of causing the tension detection device 41 to detect the tension T of the fiber rope 30 independently of the elongation detection device 20, a step of causing the control device 43 to determine the deterioration level δ of the fiber rope 30 based on the value of the elongation βm of the fiber rope 30 detected by the elongation detection device 20 and the value of the tension (load) Tmm detected by the tension detection device 41, and a step of causing the control device 43 to lower the value of the alarm value βc in accordance with the deterioration level δ.

The tension detection device 41 does not necessarily have to be a tensiometer that is fixedly installed, but may be a portable tensiometer (such as one available on the market), and also, the fiber rope 30 that includes the detectors 21 used in the mooring line monitoring system 40 of the present invention and that is validated for its ability to calculate tensions may be used. As for the arrangement position, the tension detection device 41 may be provided on the mooring lines 30 connected to the mooring members 1a on the deck 1b or the mooring lines 30 connected to the mooring members 2a on the pier 2.

Methods for determining the deterioration level δ include a first method and a second method described below. In the first method, conventionally, a piece of a fiber rope which has been used for mooring for a predetermined period of time is cut off, taken off from the vessel, and taken back to a rope factory or the like where a load that breaks the piece is measured using a tensile testing apparatus to check the deterioration level thereof. Thus, in a case where there is already stress-strain diagram data measured and accumulated by the tensile testing apparatus, the deterioration state of and the breaking load for the fiber rope are estimated by referring to the data.

The second method is used in a case where there is no such data accumulated. In the second method, how the stress-strain diagram shifts due to age-related deterioration or the like is estimated based on an increase in the elongation with respect to the same load and a decrease in the load with respect to the same elongation, extrapolation or the like is performed if necessary, and a breaking load point is thereby estimated. In other words, focusing on the fact that the fiber rope 30 changes in its elongation with respect to the same load or in its load with respect to the same elongation due to age-related deterioration or the like, calculations can be performed as follows.

In the second method, even if the same tension (load) Tmm applies to the fiber rope 30, the elongation βm of the fiber rope 30 gradually increases due to age-related deterioration; thus, "γ=(elongation βm)/(tension (load) Tmm)," which is the ratio γ of the value of the elongation βm of the fiber rope 30 to the tension (load) Tmm detected by the tension detection device 41, gradually increases.

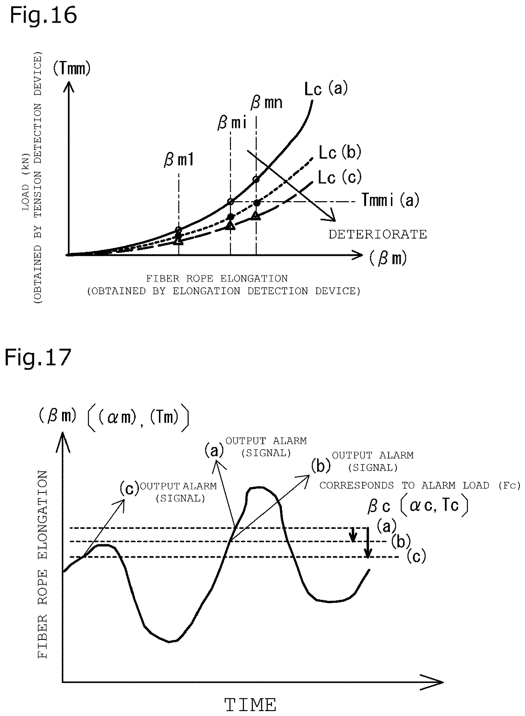

Thus, as shown in Fig. 16, for the fiber rope 30 at a timepoint (a) when the fiber rope 30 is brand new and timepoints (b) and (c) after certain periods of time, data Lc(a), Lc(b), Lc(c) for curves Lc showing the relation between the fiber rope elongation βm and the tension (load) Tmm are calculated based on Tmmj and βmj measured.

Then, in a case of focusing on a change in the elongation βm with respect to the same tension (load) Tmm, γi in a preset fiber rope elongation βmi or a preset tension (load) Tmmi is defined as "γi=βmi/Tmm," and an average value γ of the fiber rope elongations βmi where i = 1 to n is calculated as γ(a)=Σ[βmi(a)/Tmmi(a)]/n, γ(b)=Σ[βmi(b)/Tmmi(b)]/n, and γ(c)=Σ[βmi(c)/Tmmi(c)]/n. Then, using γ(r) as a reference value, the deterioration level δ is defined as "δ=γ/γ(r)," and δ(a)=γ(a)/γ(r), δ(b)=γ(b)/γ(r), and δ(c)=γ(c)/γ(r) are calculated.

In a case of focusing on a change in the tension (load) Tmm with respect to the same elongation βm, as shown in Fig. 16, using the tensions (loads) Tmmi(a), Tmmi(b), Tmmi(c) for preset fiber rope elongations βmi, the deterioration levels δi for the respective fiber rope elongations βmi are defined as "δi=Tmmi/Tmmi(r)" using a reference value Tmmi(r) of each tension (load), and δi(a)=Tmmi(a)/Tmmi(r), δi(b)=Tmmi(b) /Tmmi(r), and δi(c)=Tmmi(c) /Tmmi(r) are calculated. Further, the deterioration level δ of the fiber rope 30 is defined as "δ=[Σδi]/n," and the average value of the fiber rope elongations Bmi where i = 1 to n, δ(a)=[Σδi(a)]/n, δ(b)=[Σδi(b)]/n, and δ(c)=[Σδi(c)]/n are calculated.

The reference values γ(r) and Tmmi (r) may be the values γ(a) and Tmmi(a) for the timepoint (a) when the fiber rope 30 is brand new or may be values set based on, for example, results of experiments or calculations performed in advance. When the values γ(a) and Tmmi(a) for the timepoint (a) when the fiber rope 30 is brand new are used, the individual properties (manufacturing variations) of the fiber ropes 30 can be taken into consideration.

The deterioration level δ of the fiber rope 30 is calculated using the above methods, and as shown in Fig. 17, the value of the alarm value βc is lowered in accordance with the deterioration level δ. For example, the alarm value βc may be changed to βc(b)=βc(a)/γ(b). In other words, the value of the alarm value βc is lowered continuously or in stages as the deterioration level δ increases. The relation between the deterioration level δ and the alarm value βc is set in advance by experiment, calculation, or the like. In this way, the value of the alarm value βc can be updated and adjusted based on the deterioration level δ of the mooring line 30.

Although the "fiber rope elongation βm" and the "alarm value βc" are used as the "elongation" and the "alarm value" above, the "strand elongation αm" and the "alarm value αc" or the "tension Tm" and the "alarm value Tc" may be used instead.

Further, the control device 43 is configured to warn that it is time to replace the fiber rope 30 when the deterioration level δ of the fiber rope 30 exceeds a preset replacement timing warning value δc.

Specifically, the control device 43 of the mooring line monitoring system 40 has a function to calculate the deterioration level δ of the fiber rope 30, a function to compare the calculated deterioration level δ with the preset replacement timing warning value δc, and a function to warn that it is time to replace the fiber rope 30 when determining that the deterioration level δ exceeds the replacement timing warning value δc.

In other words, the mooring line monitoring method performed by the mooring line monitoring system 40 has a step of calculating the deterioration level δ of the fiber rope 30, a step of comparing the calculated deterioration level δ with the preset replacement timing warning value δc, and a step of warning that it is time to replace the fiber rope 30 when determining that the deterioration level δ exceeds the replacement timing warning value δc.

The deterioration level value δc for replacement timing warning is set in advance by experiment, calculation, or the like. Although there is a risk of the fiber rope 30 breaking while mooring the vessel if the deterioration level δ of the fiber rope 30 progresses, the warning allows the fiber rope 30 to be replaced at an appropriate timing and therefore to forestall breaking of the fiber rope 30. Thus, the safety during mooring can be improved.

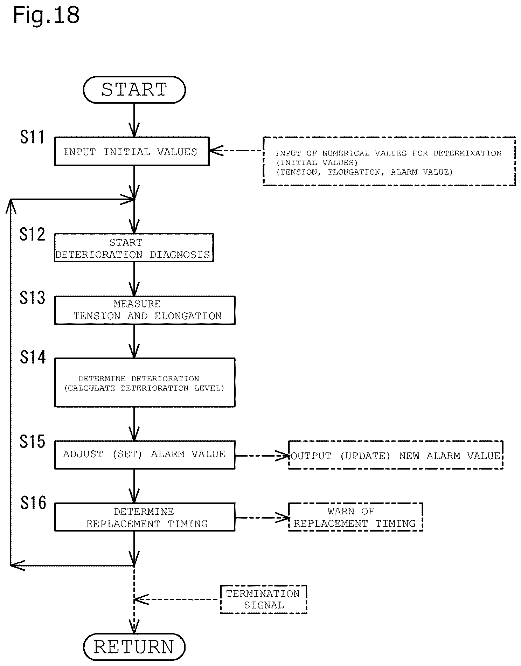

Fig. 18 shows an example of control flow for a control method for adjusting the alarm value βc and determining the timing to replace the fiber rope 30 based on the deterioration level δ of the fiber rope 30. When the control device 43 is switched on, the control flow in Fig. 18 is called by higher-level control flow and started. Then in Step S11, initial values are inputted. The initial values are numerical values used for determinations and may be the reference "tension-elongation relation," the alarm value βc for a brand-new rope, and the like.

Next in Step S12, deterioration determination is started. In the deterioration determination, in Step S13, the tension (load) Tmmi and the elongation βmi of the target fiber rope 30 are measured, and in Step S14, the deterioration level δ is calculated based on the relation between the tension (load) Tmm and the elongation βm thus measured.

Next in Step S15, the alarm value βc is adjusted to set a new alarm value βc. Then, this new alarm value βc is outputted or updated, and higher-level control flow or the like uses this alarm value βc to determine whether to issue an alarm.

Next in Step S16, the timing to replace the fiber rope 30 is determined. Then, when it is determined that it is time for replacement, a warning is issued to inform that it is time for replacement. Then, the flow proceeds back to Step S12 to repeat Steps S12 to S16. Then, when this control flow is interrupted by issuance of a termination signal such as switching off of the control device 43, the flow returns and proceeds back to the higher-level control flow from a current step, and when the higher-level control flow ends, the control flow in Fig. 18 ends, ending this control flow.

Next, the mooring management system 50 of an embodiment according to the present invention includes the above-described mooring line monitoring system 40. The control device 43 is configured to control the mooring devices 42 that wind up the respective mooring lines 30 so that the tension T of each mooring line 30 obtained by the mooring line monitoring system 40 may be a preset target tension Tt at at least any of the following timings: during the mooring work using the mooring line 30, at the completion of the mooring work, and during mooring.

The arrangement of the detectors 21 in each mooring line 30 for the automatic adjustment of the mooring line 30 is preferably such that the detectors 21 are provided in a part to be straight when the fiber rope 30 is set up and to be on the vessel (or close to the bollard on shore). Also, the elastic modulus η of each fiber rope 30 may be obtained to calculate the tension of the mooring line 30 from the elastic modulus η based on a preset relation between the elastic modulus η and the tension T so that the distribution of the tensions T of the mooring lines 30 may be monitored or automatically adjusted based on the tensions T of the mooring lines 30.

Further, in-depth mooring management is possible by manipulating or controlling the mooring devices 42 and particularly by performing motion adjustment based on data on the tensions Tm obtained by the detectors 21 considering the states of the vessel such as its posture and body motion that are calculated based on signals from a global positioning system (GPS), in addition to data related to the vessel 1 such as meteorological and hydrological conditions and tidal currents.

According to this configuration, the tensions Tm of the respective mooring lines 30 obtained from the mooring line monitoring system 40 can be used; thus, not only is breakage of the mooring lines 30 forestalled, but also the mooring state can be improved by adjustment of the tensions T of the respective mooring lines 30 to allow the moored vessel 1 not to move so much, keeping the vessel 1 in a better moored state from hour to hour against disturbances such as meteorological and hydrological conditions, the cargo load state of the vessel, and waves incident on the vessel 1. The degree of deterioration can also be diagnosed by calculation of the elastic modulus η in combination with the tension detection device 41.

Next, a mooring line monitoring method and a mooring management method according to the present invention are described. In the mooring line monitoring method, the elongation detection device 20 measures the elongation βm of a fiber rope forming each mooring line 30 when the vessel 1 is moored to the pier 2 using the mooring line 30, and the tension Tm of the fiber rope 30 is calculated from the detection value αm (or βm) from the elongation detection device 20.

According to this mooring line monitoring method, the tension Tm of the mooring line 30 is calculated not from the load F applied to the fiber rope 30, but from the detection value αm from the elongation detection device 20 based on the relation between the elongation αm and the tension Tm set in advance or the relation between the elongation αm and the tension (load) Tmm obtained just previously. Thus, the tension Tm of each mooring line 30 can be accurately calculated not only during the mooring work and at the completion of the mooring work, but also while the mooring line 30 is mooring the vessel.

Also, in the mooring management method of an embodiment according to the present invention, when the vessel 1 is moored to e.g. the pier 2 using a plurality of mooring lines 30, for each of the mooring lines 30 the tension Tm of the mooring line 30 is calculated from the detection value αm (or βm) measured by the elongation detection device 20 twisted into the mooring line 30, and also, the mooring devices 42 that wind up the respective mooring lines 30 are controlled so that the calculated tension Tm of each of the mooring lines 30 may reach its preset corresponding target tension Tt, at at least any one of the following timings: during the mooring work using the mooring lines 30, at the completion of the mooring work, and during mooring.

According to the mooring management method, not only is breakage of the mooring lines 30 forestalled, but also the mooring state is improved by adjustment of the tensions T of the respective mooring lines 30 to allow the moored vessel 1 not to move so much, keeping the vessel 1 in a better moored state from hour to hour against factors such as meteorological and hydrological conditions or the cargo load state of the vessel 1.

Thus, according to the mooring line monitoring system 40 and the mooring management system 50 configured as above as well as the mooring line monitoring method and the mooring management method, the tensions Tm of the mooring lines 30 can be detected with a relatively simple configuration, and breakage of the mooring lines 30 can be predicted and forestalled.

### EXPLANATION OF REFERENCE NUMERALS

- 1: vessel
- 1a: mooring member on deck
- 1b: deck
- 2: pier
- 2a: mooring member on pier side
- 2b: tensiometer
- 2c: data management device
- 20: elongation detection device
- 21: detector (elongation sensor)
- 21a: coil core
- 21b: coil winding
- 21c: insulating resin coating
- 21d: electromagnetic wave shield layer
- 22: measurement interconnection
- 23: primary-side compact connector (detector-side connector)
- 24: secondary-side compact connector (control-device-side connector)
- 25: control-device-side wiring cable
- 26: wired signal transmission cable
- 27: data processing device
- 27a: radio signal transmitter
- 28: repeater
- 30: mooring line (fiber rope)
- 30a: loop at end of mooring line
- 32a: strand having detectors incorporated inside
- 32b,: 32c strand without detectors
- 33: cushioning material
- 34: fiber belt cover
- 40: mooring line monitoring system
- 41: tension detection device (such as portable tensiometer)
- 42: mooring device (such as mooring winch)
- 43: control device
- 43a: monitor device
- 50: mooring management system
- 51: fender
- F: load
- Fc: alarm load
- Fd: breaking load
- T: tension of mooring line
- Tc: tension corresponding to alarm load
- Td: tension corresponding to breaking load
- Tm: tension (tension calculated by elongation detection device)
- Tmm: tension (load) (tension (load) detected by tension detection device)
- Tt: target tension
- α: strand elongation of detector (elongation)
- αa: elongation as obtained by dimensional measurement (strand elongation)
- αc, βc: alarm value corresponding to alarm load
- αd: strand elongation corresponding to breaking load
- αm: detected strand elongation (elongation)
- βd: fiber rope elongation corresponding to breaking load (elongation)
- βm: fiber rope elongation (elongation)
- γ: ratio of elongation to tension
- δ: deterioration level
- η: elongation

## Claims

1. A mooring line monitoring system (40) comprising
an elongation detection device (20) that detects an elongation of a fiber rope (30) forming a mooring line (30) mooring a vessel (1); and
a control device (43) that calculates a tension of the mooring line (30) from a detection value from the elongation detection device (20), **characterized in that** the elongation detection device (20) has a line-shaped detector (21) that detects the elongation of the fiber rope (30), and the fiber rope (30) incorporates the detector (21) inside.

2. The mooring line monitoring system (40) according to claim 1, **characterized in that**
the control device (43) is configured to either output an alarm or output a signal when the detection value from the elongation detection device (20) or a calculation value which is calculated from the detection value and related to a tension of the mooring line (30) exceeds a preset alarm value.

3. The mooring line monitoring system (40) according to claim 2, **characterized in that**
the control device (43) is configured to determine a deterioration level of the fiber rope (30) based on a value of the elongation of the fiber rope (30) detected by the elongation detection device (20) and a tension value detected by a tension detection device (41) that detects a tension of the fiber rope (30) independently of the elongation detection device (20), and lower a value of the alarm value in accordance with the deterioration level.

4. The mooring line monitoring system (40) according to claim 3, **characterized in that**
the control device (43) is configured to warn that it is time to replace the fiber rope (30) when the deterioration level exceeds a preset replacement timing warning value.

5. The mooring line monitoring system (40) according to claim 1, **characterized in that** the fiber rope (30) includes
a detector-side connector (23) which is connected to the detector (21) incorporated inside a strand (32a) of the fiber rope (30) or a measurement interconnection (22) connected to the detector (21) and is disposed on an outer periphery of the strand (32a) of the fiber rope (30),
a control-device-side connector (24) which is detachably joined to the detector-side connector (23) and is connected to a control-device-side wiring cable (25), and
a protection member (34) that covers the detector-side connector (23) and the control-device-side connector (24) along with the fiber rope (30).

6. The mooring line monitoring system (40) according to claim 1, **characterized in that**
the detector (21) incorporated inside a strand (32a) of the fiber rope (30) or a measurement interconnection (22) connected to the detector (21) is connected to a data processing device (27) provided inside or separately from a mooring device (42) that winds up the fiber rope (30), and
the data processing device (27) is configured to convert an analog signal transmitted from the detector (21) into a digital signal and transmits the digital signal to the control device (43) in a wired or wireless manner.

7. The mooring line monitoring system (40) according to claim 5 or 6, **characterized in that**
the detector (21) incorporated inside a strand (32a) of the fiber rope (30) or a measurement interconnection 822) connected to the detector (21) is connected to a data processing device (27) provided inside or on a surface of the fiber rope (30), and
the data processing device (27) is configured to convert an analog signal transmitted from the detector (21) into a digital signal and transmit the digital signal to the control device (43) either directly or via a repeater (28) provided inside or separately from a mooring device (42) that winds up the fiber rope (30), either in a wired manner through a wired signal transmission line (26) provided inside the fiber rope (30) or in a wireless manner using a radio signal transmitter (27a) provided inside the fiber rope (30) .

8. The mooring line monitoring system (40) according to any one of claims 5 to 7, **characterized in that**
the detector (21) is disposed in each of a first half of the fiber rope (30) which extends from a lengthwise center of the fiber rope (30) to one end of the fiber rope (30) and a second half of the fiber rope (30) which extends from the center to another end of the fiber rope (30), and
each of the detectors (21) or the measurement interconnections (22) connected to the respective detectors (21) are drawn out from between the detector (21) disposed in the first half and the detector (21) disposed in the second half.

9. A mooring management method **characterized in that**
the mooring management method comprises the mooring line monitoring system (40) according to any one of claims 1 to 8, and
the control device (43) is configured to control a mooring device (42) that winds up the mooring line (30) so that a tension of the mooring line (30) obtained by the mooring line monitoring system (40) reaches a preset target tension at at least one of the following timings: during mooring work using the mooring line (30), at the completion of the mooring work, and during mooring.

10. A mooring line monitoring method the mooring line monitoring method comprising:
measuring an elongation of a fiber rope (30) forming a mooring line (30) when the mooring line (30) is used to moor a vessel by using an elongation detection device (20), wherein the elongation detection device (20) has a line-shaped detector (21) that detects the elongation of the fiber rope (30), and the fiber rope (30) incorporates the detector (21) inside; and
calculating a tension of the mooring line (30) from a detection value from the elongation detection device (20).

11. A mooring management system (50) **characterized in that**
when a vessel (1) is moored using a plurality of mooring lines (30), for each of the mooring lines (30), a tension of the mooring line (30) is calculated from a detection value measured by an elongation detection device (20) that has a line-shaped detector (21) which is twisted into the mooring line (30) and which measures an elongation of a fiber rope (30) forming the mooring line (30), and
for each of the mooring lines (30), a mooring device (42) that winds up the mooring line (30) is controlled so that the calculated tension of the mooring line (30) reaches a preset corresponding target tension at at least one of the following timings: during mooring work using the mooring line (30), at the completion of the mooring work, and during mooring.

## Patentansprüche

1. Verankerungsleinenüberwachungssystem (40) mit
einer Dehnungserfassungsvorrichtung (20), die eine Dehnung eines Faserseils (30) erfasst, das eine Verankerungsleine (30) bildet, die ein Schiff (1) verankert, und
eine Steuervorrichtung (43), die eine Spannung der Verankerungsleine (30) aus einem Erfassungswert von der Dehnungserfassungsvorrichtung (20) berechnet, **dadurch gekennzeichnet, dass**
die Dehnungserfassungsvorrichtung (20) einen linienförmigen Detektor (21) aufweist, der die Dehnung des Faserseils (30) detektiert, und das Faserseil (30) den Detektor (21) in sich aufnimmt.

2. Verankerungsleinenüberwachungssystem (40) nach Anspruch 1, **dadurch gekennzeichnet, dass**
die Steuervorrichtung (43) so konfiguriert ist, dass sie entweder einen Alarm ausgibt oder ein Signal ausgibt, wenn der Erfassungswert von der Dehnungserfassungsvorrichtung (20) oder ein Berechnungswert, der aus dem Erfassungswert berechnet wird und sich auf eine Spannung der Verankerungsleine (30) bezieht, einen voreingestellten Alarmwert überschreitet.

3. Verankerungsleinenüberwachungssystem (40) nach Anspruch 2, **dadurch gekennzeichnet, dass**
die Steuervorrichtung (43) so konfiguriert ist, dass sie einen Verschlechterungsgrad des Faserseils (30) auf der Grundlage eines Werts der Dehnung des Faserseils (30), der von der Dehnungserfassungsvorrichtung (20) erfasst wird, und eines Spannungswerts, der von einer Spannungserfassungsvorrichtung (41) erfasst wird, die eine Spannung des Faserseils (30) unabhängig von der Dehnungserfassungsvorrichtung (20) erfasst, bestimmt und einen Wert des Alarmwerts in Übereinstimmung mit dem Verschlechterungsgrad senkt.

4. Verankerungsleinenüberwachungssystem (40) nach Anspruch 3, **dadurch gekennzeichnet, dass**
die Steuervorrichtung (43) so konfiguriert ist, dass sie warnt, dass es an der Zeit ist, das Faserseil (30) zu ersetzen, wenn der Verschlechterungsgrad einen voreingestellten Austauschzeitpunktwarnwert überschreitet.

5. Verankerungsleinenüberwachungssystem (40) nach Anspruch 1, **dadurch gekennzeichnet, dass** das Faserseil (30) Folgendes umfasst
einen detektorseitigen Verbinder (23), der mit dem Detektor (21) verbunden ist, der in einer Strang (32a) des Faserseils (30) eingebaut ist, oder eine Messverbindung (22), die mit dem Detektor (21) verbunden ist und an einem Außenumfang des Strangs (32a) des Faserseils (30) angeordnet ist,
einen steuergeräteseitigen Verbinder (24), der lösbar mit dem detektorseitigen Verbinder (23) verbunden ist und mit einem steuergeräteseitigen Verdrahtungskabel (25) verbunden ist, und
ein Schutzteil (34), das den detektorseitigen Verbinder (23) und den steuergeräteseitigen Verbinder (24) zusammen mit dem Faserseil (30) abdeckt.

6. Verankerungsleinenüberwachungssystem (40) nach Anspruch 1, **dadurch gekennzeichnet, dass**
der in einem Strang (32a) des Faserseils (30) eingebaute Detektor (21) oder eine mit dem Detektor (21) verbundene Messverbindung (22) mit einer Datenverarbeitungseinrichtung (27) verbunden ist, die innerhalb oder getrennt von einer das Faserseil (30) aufwickelnden Verankerungsvorrichtung (42) vorgesehen ist, und
die Datenverarbeitungsvorrichtung (27) konfiguriert ist, um ein vom Detektor (21) übertragenes analoges Signal in ein digitales Signal umzuwandeln und das digitale Signal drahtgebunden oder drahtlos an die Steuervorrichtung (43) zu übertragen.

7. Verankerungsleinenüberwachungssystem (40) nach Anspruch 5 oder 6, **dadurch gekennzeichnet, dass**
der Detektor (21), der in einem Strang (32a) des Faserseils (30) eingebaut ist, oder eine mit dem Detektor (21) verbundene Messverbindung (22) mit einer Datenverarbeitungsvorrichtung (27) verbunden ist, die in oder an einer Oberfläche des Faserseils (30) vorgesehen ist, und
die Datenverarbeitungsvorrichtung (27) konfiguriert ist, um ein von dem Detektor (21) übertragenes analoges Signal in ein digitales Signal umzuwandeln und das digitale Signal an die Steuervorrichtung (43) entweder direkt oder über einen Repeater (28), der innerhalb oder getrennt von einer Verankerungsvorrichtung (42) vorgesehen ist, die das Faserseil (30) aufwickelt, entweder auf drahtgebundene Weise über eine verdrahtete Signalübertragungsleitung (26), die innerhalb des Faserseils (30) angeordnet ist, oder drahtlos über einen Funksignalgeber (27a) im Inneren des Faserseils (30) zu übertragen.

8. Verankerungsleinenüberwachungssystem (40) nach einem der Ansprüche 5 bis 7, **dadurch gekennzeichnet, dass**
der Detektor (21) in jeder einer ersten Hälfte des Faserseils (30), die sich von einer Längsmitte des Faserseils (30) zu einem Ende des Faserseils (30) erstreckt, und einer zweiten Hälfte des Faserseils (30), die sich von der Mitte zu einem anderen Ende des Faserseils (30) erstreckt, angeordnet ist, und
jeder der Detektoren (21) oder der Messverbindungen (22), die mit den jeweiligen Detektoren (21) verbunden sind, zwischen dem in der ersten Hälfte angeordneten Detektor (21) und dem in der zweiten Hälfte angeordneten Detektor (21) herausgezogen werden.

9. Verankerungssteuerungsverfahren, **dadurch gekennzeichnet, dass** das Verankerungssteuerungsverfahren das Verankerungsleinenüberwachungssystem (40) nach einem der Ansprüche 1 bis 8 umfasst, und
die Steuervorrichtung (43) konfiguriert ist zum Steuern einer Verankerungsvorrichtung (42), die die Verankerungsleine (30) so aufwickelt, dass eine durch das Verankerungsleinenüberwachungssystem (40) ermittelte Spannung der Verankerungsleine (30) eine zuvor festgelegte Zielspannung zu mindestens einem der folgenden Zeitpunkte erreicht: während Verankerungsarbeiten mit der Verankerungsleine (30), bei Abschluss der Verankerungsarbeiten und während des Verankerns.

10. Verankerungsleinenüberwachungsverfahren, wobei das Verankerungsleinenüberwachungsverfahren umfasst:
Messen einer Dehnung eines Faserseils (30), das eine Verankerungsleine (30) bildet, wenn die Verankerungsleine (30) zum Verankern eines Schiffes verwendet wird, unter Verwendung einer Dehnungserfassungsvorrichtung (20), wobei die Dehnungserfassungsvorrichtung (20) einen linienförmigen Detektor (21) aufweist, der die Dehnung des Faserseils (30) erfasst, und das Faserseil (30) den Detektor (21) in sich aufnimmt, und
Berechnen einer Spannung der Verankerungsleine (30) aus einem Erfassungswert von der Dehnungserfassungsvorrichtung (20).

11. Verankerungssteuerungssystem (50), **dadurch gekennzeichnet, dass**
wenn ein Schiff (1) unter Verwendung einer Vielzahl von Verankerungsleinen (30) vertäut wird, für jede der Verankerungsleinen (30) eine Spannung der Verankerungsleine (30) aus einem Erfassungswert berechnet wird, der von einer Dehnungserfassungsvorrichtung (20) gemessen wird, die einen linienförmigen Detektor (21) aufweist, der in die Verankerungsleine (30) eingedreht ist und der eine Dehnung eines Faserseils (30) misst, das die Verankerungsleine (30) bildet, und
für jede der Verankerungsleinen (30) eine Verankerungsvorrichtung (42), die die Verankerungsleine (30) aufwickelt, so gesteuert wird, dass die berechnete Spannung der Verankerungsleine (30) eine voreingestellte entsprechende Sollspannung zu mindestens einem der folgenden Zeitpunkte erreicht: während der Verankerungsarbeiten mit der Verankerungsleine (30), bei Beendigung der Verankerungsarbeiten, und während des Verankerns.

## Revendications

1. Système de surveillance de ligne d'amarrage (40) comprenant un dispositif de détection d'allongement (20) qui détecte un allongement d'un câble de fibres (30) formant une ligne d'amarrage (30) amarrant un navire (1) ; et
un dispositif de commande (43) qui calcule une tension de la ligne d'amarrage (30) à partir d'une valeur de détection provenant du dispositif de détection d'allongement (20), **caractérisé en ce que**
le dispositif de détection d'allongement (20) présente un détecteur en forme de ligne (21) qui détecte l'allongement du câble de fibre (30), et le câble de fibres (30) incorpore le détecteur (21) en son sein.

2. Système de surveillance de ligne d'amarrage (40) selon la revendication 1, **caractérisé en ce que**
le dispositif de commande (43) est configuré pour délivrer en sortie une alarme ou délivrer en sortie un signal lorsque la valeur de détection provenant du dispositif de détection d'allongement (20) ou une valeur de calcul qui est calculée à partir de la valeur de détection et liée à une tension de la ligne d'amarrage (30) dépasse une valeur d'alarme prédéfinie.

3. Système de surveillance de ligne d'amarrage (40) selon la revendication 2, **caractérisé en ce que**
le dispositif de commande (43) est configuré pour déterminer un niveau de détérioration du câble de fibres (30) sur la base d'une valeur de l'allongement du câble de fibres (30) détectée par le dispositif de détection d'allongement (20) et d'une valeur de tension détectée par un dispositif de détection de tension (41) qui détecte une tension du câble de fibres (30) indépendamment du dispositif de détection d'allongement (20), et abaisser une valeur de la valeur d'alarme en fonction du niveau de détérioration.

4. Système de surveillance de ligne d'amarrage (40) selon la revendication 3, **caractérisé en ce que** le dispositif de commande (43) est configuré pour avertir qu'il est temps de remplacer le câble de fibres (30) lorsque le niveau de détérioration dépasse une valeur d'avertissement de cadencement de remplacement prédéfinie.

5. Système de surveillance de ligne d'amarrage (40) selon la revendication 1, **caractérisé en ce que** le câble de fibres (30) inclut
un connecteur côté détecteur (23) qui est connecté au détecteur (21) incorporé à l'intérieur d'un brin (32a) du câble de fibres (30) ou à une interconnexion de mesure (22) connectée au détecteur (21), et est disposé sur une périphérie extérieure du brin (32a) du câble de fibres (30),
un connecteur côté dispositif de commande (24) qui est relié de manière amovible au connecteur côté détecteur (23) et est connecté à un fil de câblage côté dispositif de commande (25), et
un élément de protection (34) qui recouvre le connecteur côté détecteur (23) et le connecteur côté dispositif de commande (24) en même temps que le câble de fibres (30).

6. Système de surveillance de ligne d'amarrage (40) selon la revendication 1, **caractérisé en ce que** le détecteur (21) incorporé à l'intérieur d'un brin (32a) du câble de fibres (30) ou une interconnexion de mesure (22) connectée au détecteur (21) est connecté(e) à un dispositif de traitement de données (27) prévu à l'intérieur ou séparément d'un dispositif d'amarrage (42) qui termine le câble de fibres (30), et
le dispositif de traitement de données (27) est configuré pour convertir un signal analogique transmis à partir du détecteur (21) en un signal numérique et transmet le signal numérique au dispositif de commande (43) de manière câblée ou sans fil.

7. Système de surveillance de ligne d'amarrage (40) selon la revendication 5 ou 6, **caractérisée en ce que**
le détecteur (21) incorporé à l'intérieur d'un brin (32a) du câble de fibres (30) ou une interconnexion de mesure (822) connectée au détecteur (21) est connecté(e) à un dispositif de traitement de données (27) prévu à l'intérieur ou sur une surface du câble de fibre (30), et
le dispositif de traitement de données (27) est configuré pour convertir un signal analogique transmis par le détecteur (21) en un signal numérique et transmettre le signal numérique au dispositif de commande (43) soit directement, soit via un répéteur (28) disposé à l'intérieur ou séparément d'un dispositif d'amarrage (42) qui termine le câble de fibres (30), soit de manière câblée par l'intermédiaire d'une ligne de transmission de signal câblée (26) prévue à l'intérieur du câble de fibres (30), soit de manière sans fil à l'aide d'un émetteur de signal radio (27a) disposé à l'intérieur du câble de fibres (30).

8. Système de surveillance de ligne d'amarrage (40) selon l'une quelconque des revendications 5 à 7, **caractérisé en ce que**
le détecteur (21) est disposé dans chacune d'une première moitié du câble de fibres (30) qui s'étend depuis un centre longitudinal du câble de fibres (30) jusqu'à une extrémité du câble de fibres (30) et d'une seconde moitié du câble de fibres (30) qui s'étend depuis le centre jusqu'à une autre extrémité du câble de fibres (30), et
chacun des détecteurs (21) ou des interconnexions de mesure (22) connectés aux détecteurs respectifs (21) sont tirés d'entre le détecteur (21) disposé dans la première moitié et le détecteur (21) disposé dans la seconde moitié.

9. Procédé de gestion d'amarrage **caractérisé en ce que**
le procédé de gestion d'amarrage comprend le système de surveillance de ligne d'amarrage (40) selon l'une quelconque des revendications 1 à 8, et
le dispositif de commande (43) est configuré pour commander un dispositif d'amarrage (42) qui termine la ligne d'amarrage (30) de sorte qu'une tension de la ligne d'amarrage (30) obtenue par le système de surveillance de ligne d'amarrage (40) atteigne une tension cible prédéfinie à au moins l'un des moments suivants : pendant un travail d'amarrage en utilisant la ligne d'amarrage (30), à la fin du travail d'amarrage, et pendant un amarrage.

10. Procédé de surveillance de ligne d'amarrage, le procédé de surveillance de ligne d'amarrage comprenant les étapes consistant à :
mesurer un allongement d'un câble de fibres (30) formant une ligne d'amarrage (30) lorsque la ligne d'amarrage (30) est utilisée pour amarrer un navire en utilisant un dispositif de détection d'allongement (20), dans lequel le dispositif de détection d'allongement (20) présente un détecteur en forme de ligne (21) qui détecte l'allongement du câble de fibres (30), et le câble de fibres (30) incorpore le détecteur (21) en son sein ; et
calculer une tension de la ligne d'amarrage (30) à partir d'une valeur de détection provenant du dispositif de détection d'allongement (20).

11. Système de gestion d'amarrage (50), **caractérisé en ce que**
lorsqu'un navire (1) est amarré à l'aide d'une pluralité de lignes d'amarrage (30), pour chacune des lignes d'amarrage (30), une tension de la ligne d'amarrage (30) est calculée à partir d'une valeur de détection mesurée par un dispositif de détection d'allongement (20) qui présente un détecteur en forme de ligne (21) qui est torsadé dans la ligne d'amarrage (30) et qui mesure d'allongement d'un câble de fibres (30) formant la ligne d'amarrage (30), et
pour chacune des lignes d'amarrage (30), un dispositif d'amarrage (42) qui termine la ligne d'amarrage (30) est commandé de sorte que la tension calculée de la ligne d'amarrage (30) atteigne une tension cible correspondante prédéfinie à au moins l'un des moments suivants : pendant un travail d'amarrage en utilisant la ligne d'amarrage (30), à la fin du travail d'amarrage, et pendant un amarrage.
